# EUROPEAN PATENT APPLICATION

(11) **EP 1 691 244 A2**
(43) Date of publication of application: **16.08.2006**
(21) Application number: 06250768.6
(22) Date of filing: 13.02.2006
(51) Int. Cl.: G05B 19/00

(54) **Production plant**

(30) Priority: 15.02.2005 EP 05425072
(71) Applicant: CNH Italia S.p.A., 41100 Modena (IT)
(72) Inventor: Agazzani, Tiziano, 41100 Modena (IT)
(74) Representative: Powell, Timothy John

(57) **Abstract**

A production plant (1) having a number of machine tools (2), a number of tools/instruments (3), and a computer system (4) having a number of first memory cells (9) containing work cycle descriptions, a number of second memory cells (10) containing operation descriptions, a number of third memory cells (11) containing phase descriptions, a number of fourth memory cells (12) containing first ties between each first memory cell (9) and a number of second memory cells (10), and a number of fifth memory cells (13) containing second ties between each second memory cell (10) and a number of third memory cells (11).

## Description

The invention relates to a method of relating changes in data records to the operation of tools (especially machine tools); and to a production plant.

The invention also relates to a novel method of:
- documenting process data in a production plant;
- distributing the data efficiently,
- maintaining it; and
- sharing data.

The invention may be used to advantage in a machine shop (or workshop), to which the following description refers purely by way of example.

A workshop comprises a number of machine tools, each for performing a given range of machining operations, and number of tools instruments and other implements such as gauges and other metrology devices, and may carry out a large number of machining processes, each for producing a given mechanical part.

To ensure all the machining processes are carried out properly (in terms of both the end result and operator safety), international quality standards (in particular ISO 9000) require that each machining process be adequately documented.

In the case of paper documentation ISO 9000 requires that each document be drawn up in a number of stamped, numbered, certified copies. An organisation operating under ISO 9000 may decide how many such copies to draw up, depending on the nature of the organization and on the process under consideration.

When producing a part using one or more machine tools, the first document to be drawn up is the work cycle, which lists all the operations by which a workpiece becomes a finished part Each operation in the work cycle has a progressive identification number; a description of the machine tool to be used (possibly the machine tool location within the workshop); and a description of the work to be carried out on the workpiece, and which is normally defined by an orderly succession of elementary jobs/operations defined as phases.

International standards require that the companies document the processes they operate. Each company may choose precisely how to document each process. Normally for each phase in a manufacturing operation, a respective card is drawn up documenting for example the correct tool(s) to use, a machining plan, and any other necessary information. Thus the card provides the operator with detailed information on how to carry out the required work on any given mechanical part.

In a medium or large-sized workshop, the amount of documentation involved in accurately describing each phase in each possible work cycle is therefore extensive and is often burdensome. Moreover, whenever changes are made to a tool or to the way in which the work is performed, all the relative cards must also be altered. Creating and, above all, continually updating all the documentation involved is thereof an extremely time-consuming hight-coast process.

Computer systems to automate creation and management of such documentation have been proposed, and which provide for creating and updating electronic documents that are printable on demand. Such documents, however, are none other than electronic versions of the corresponding paper documents, and are managed in exactly the same way. Consequently, although updating is more efficient than using conventional paper documents, the time factor involved is still considerable.

According to a first aspect of the invention there is provided a method of relating changes, in a plurality of data records describing and/or defining a plurality of activities that are capable of being performed by a plurality of tools, to the operations of the tools themselves, the method comprising the steps of, in one or more memory devices,
a. providing a plurality of first memory locations each containing data defining a work cycle;
   machine tool location within the workshop); and a description of the work to be carried out on the workpiece, and which is normally defined by an orderly succession of elementary jobs/operations defined as phases..

International standards require that tlae companies document the processes they operate. Each company may choose precisely how to document each process. Normally for each phase in a manufacturing operation, a respective card is drawn up documenting for example the correct tool(s) to use, a machining plan, and any other necessary information. Thus the card provides the operator with detailed information on how to carry out the required work on any given mechanical part.

In a medium- or large-sized workshop, the amount of documentation involved in accurately describing each phase in each possible work cycle is therefore extensive and is often burdensome. Moreover, whenever changes are made to a tool or to the way in which the work is performed, all the relative cards must also be altered. Creating and, above all, continually updating all the documentation involved is therefore an extremely time consuming, high-cost process.

Computer systems to automate creation and management of such documentation have been proposed, and which provide for creating and updating electronic documents that are printable on demand. Such documents, however, are none other than electronic versions of the corresponding paper documents, and are managed in exactly the same way. Consequently, although updating is more efficient than using conventional paper documents, the time factor involved is still considerable.

According to a first aspect of the invention there is provided a method of relating changes, in a plurality of data records describing and/or defining a plurality of activities that are capable of being performed by a plurality of tools, to the operations of the tools themselves, the method comprising the steps of, in one or more memory devices,
a. providing a plurality of first memory locations each containing data defining a work cycle;
b. providing a plurality of second memory locations each containing data defining an operation that may form part of a said work cycle, each said operation comprising one or more phases;
c. providing a plurality of third memory locations each containing data defining a said phase;
d. providing a plurality of fourth memory locations each containing data relating to a part to be manufactured;
e. providing a plurality of fifth memory locations each containing data relating to an implement to be used in one or more of the phases; and
f. linking the data in the memory locations such that the data are combinable to create a plurality of data sets each including (i) the identification and/or characteristics of a part selected from the data in the fourth memory location, (ii) the identification and/or characteristics of one or more implements selected from the data in the fifth memory location and (iii) data defining a series of phases employing the or each implement and selected from the data in the first, second and third memory locations that amount to the manufacture of the part using the selected implement or implements,characterised in that the linking of the data is such as to cause automatic updating of linked data on the updating of any individual item of data.

The ability simultaneously to update several linked documents (or other data files) is unique in the environment of tool-based production plant. This facility moreover permits the saving of considerable amounts of time when effecting updates. Indeed the time saving involved is so significant that it is out of proportion with the workrate that could be achieved using manual updating techniques as are available in the prior art.

Preferably in accordance with the method of the invention each data set is producible as a single document comprising a mix of graphical, numeric and textual data. This feature advantageously permits the method of the invention to include the method step of displaying the document (including the aforesaid mix of data types) via a display device such as a computer monitor. To this end the method of the invention may include the step of activating a software program known as a viewer for the purpose of displaying the document.

The method of the invention conveniently includes the step of creating and/or maintaining an address database containing data in one or more of the following classes:
a. configuration information including one or more paths by means of which a program may access data from the memory locations and activate one or more viewers permitting viewing of the data sets;
b. machine type information;
c. machine identification information;
d. supplier information
e. machine and plant manufacturer information;
f. information identifying parts to be produced;
g. plant information
h. infomiation on departments of a plant involved in the manufacture of parts; .and
i. tool composition information.

The method also operationally includes the steps of creating and/or maintaining a document database containing data in one or more of the following classes:
a. document codes;
b. user identification data;
c. document format information;
d. document type information;
e. document location information;
f. engineer identification information;
g. costing information;
h. information on data creation dates; and
j. information on the booking of documents and the statuses booked to them, and of creating and/or maintaining a part database containing data in one or more of the following classes:
   a. information identifying a product in which a part is installable;
   b. part type information;
   c. part code information;
   d. part description information;
   e. database revision information; and
   f. part production status information.

These various databases advantageously contain the information, that may require linking when practising the method of the invention, in logically grouped sets.

The method of the invention also optionally includes the steps of creating one or more work cycle data sets, operation data sets, phase data sets, implement data sets, cutting information data sets and cycle-operation-phase-part sequence data sets as defined respectively in Claims 7 to 12.

The method of the invention optionally may include the step of performing a data entry operation in order to create or update one or more data sets.

According to a second aspect of the invention, there is provided a production plant as claimed in accompanying Claims 15 to 27.

It is therefore an advantage of the invention to provide a production plant, which is cheap and easy to implement, and which, at the same time, is designed to eliminate the drawbacks of prior art production plants.

A non-limiting embodiment of the present invention will be described by way of example with reference to the accompanying drawings, in which:
Figure 1 shows a schematic view of a production plant in accordance with the present invention;
Figure 2 shows a diagram of the memory structure of a computer system of the Figure 1 plant;
Figure 3 shows a prior art CAD document; and
Figure 4 shows a document produced and updated in accordance with the invention.

In accordance with the method of the invention it is possible to create a series of databases each containing logically grouped sets of data. The respective data sets relate to respective hierarchical strata of a work cycle by following which it is possible to carry out production operations such as machining of a part. The databases are linked such that updating of data in one of them automatically effects corresponding updates in the other, linked databases.

Such an arrangement permits updating of linked data sets (which may if desired by displayed, using a viewer, and printed in the manner of document files) in considerably less time than would be possible, even if a production plant were able to allocate a large number of personnel to the updating task.

The first database to be considered is a generalised resource database typically but not necessarily including, *inter alia,* address data, machine type data; machine identification data, supplier data, machine and plant manufacturer data, data on parts produced by the manufacturing plant, drawings, schemas such, as wiring diagrams, plant identification data, factory departmental data and tool composition data. This database is used for reference purposes and in particular in order to identify and locate drawings and specifications automatically. It may or may not in any given embodiment of the invention be linked so as to permit automated updating of its contents on the completion of an updating operation in another database.

The address data set (which typically is a lookup table) contains path information employed when practising the method of the invention in order to allow a software program (such as a database management program) to access executable programs such as viewers.

A document database typically may contain for each item of data a data entry identification code, and a document identification code, a user identification code (for example identifying a department that might make use of the document in question), a document format code (signifying whether the document is in paper format, text format, computer-aided design (CAD) format and so on); a document type code (signifying whether the document concerns a fixture, a drilling or other shaping tool, a part to be manufactured, an electrical schema and so on); a description of the document; a code indicating where the document is stored; a code identifying the engineer responsible for generating the document; document cost data in units such as hours, data on the dates of creation, logging and updating of the document, and data signifying the status of the document for example in terms of whether it is *"booked", "assigned"* or *"deleted",* these terms in tum indicating whether it is at a given time permissible to make use of the data in the document in question.

Not all of the foregoing fields in the document database will necessarily be completed in respect of every document in the database. Possibly some fields will be empty in respect of all documents in the database (for example if a particular condition, that would affect all documents, had not arisen).

A part database includes:
a. information identifying a product in which a part is installable;
b. part type information;
c. part code information;
d. part description information;
e. database revision information; and
f. part production status information.

One example (of many possible examples) of a product in which a part is installable is a vehicle such as a tractor.

Following creating of such databases the method of the invention involves, in respect of each part to be manufactured, the creation of a work cycle data set containing one or more of a cycle code, cycle type information and a description of a cycle.

The cycle code is an identifier such as a number. The cycle type information might signify (for example by means of a text string) a designation of a cycle such *as "main"* (ie. in use), *"old"* (not in use) and so on.

The cycle description may also be a text string.

The method also involves the provision of an operation data set specifying, in respect of each operation, an operation identifier, a said cycle code, an operation number, an operation description, machine type information, individual machine identification, the "type position" in a said machine at which an operation takes place, machine position information, an operation description and a machine description.

Of the foregoing data arguably only the *"type position"* data are not self-explanatory.

The *"type position"* data relates to eg. machining lines in which a partly-finished part is moved from machining centre to machining centre (or from position to position) along the line. The *"type position"* data specifies the type of machining apparatus employed, according to a code.

Similarly the machine position information may signify for example the precise position, in a machining line, at which an operation takes place.

The description of the operation typically contains only minimal detail.

A phase data set is created, in accordance with the method of the invention, comprising one or more of phase identification data, a phase description and information identifying one or more parts on which a phase may be carried out. These data are believed to be self-explanatory to one of skill in the manufacturing art.

The method also involves creating an implement data set containing one or more of a data element identifier, one or more said phase identification data, implement quantity information, implement type information, an implement code, one or more said operation identifiers, implement usage frequency data, implement usage unit of measure data, and date of creation and amendment data, the implement data set linking implement data, part programs and the phase data together; a cutting information data set containing one or more of a data element identifier, phase identification information, tool diameter data, tool quantity data, tool cutting speed data, tool cutting edge number data and feed per edge data, the cutting information data set linking cutting information to the phase; and a cycle-operation-phase-part sequence data set, containing one or more of a data element identifier, a cycle identifier, an operation identifier, a phase number code, a phase identifier and a part identifier, the said data elements being linked in the data set

In the implement data set the *"implement"* may be eg. a boring tool, a milling cutter, a metrology gauge or any of a range of similar devices that may be employed in the manufacture of a part.

The main advantage of providing data in the indicated formats relates to the linking of the data as signified. This permits in effect the simultaneous updating of a vast number of potential documents. This is because each document is made up of individual data sets from the linked databases. Thus it is necessary to update only the database in question that is involved in any change. It is not necessary to update each document in which the changed data might appear, since the documents are created in real time (employing appropriate viewer software) from the linked data elements.

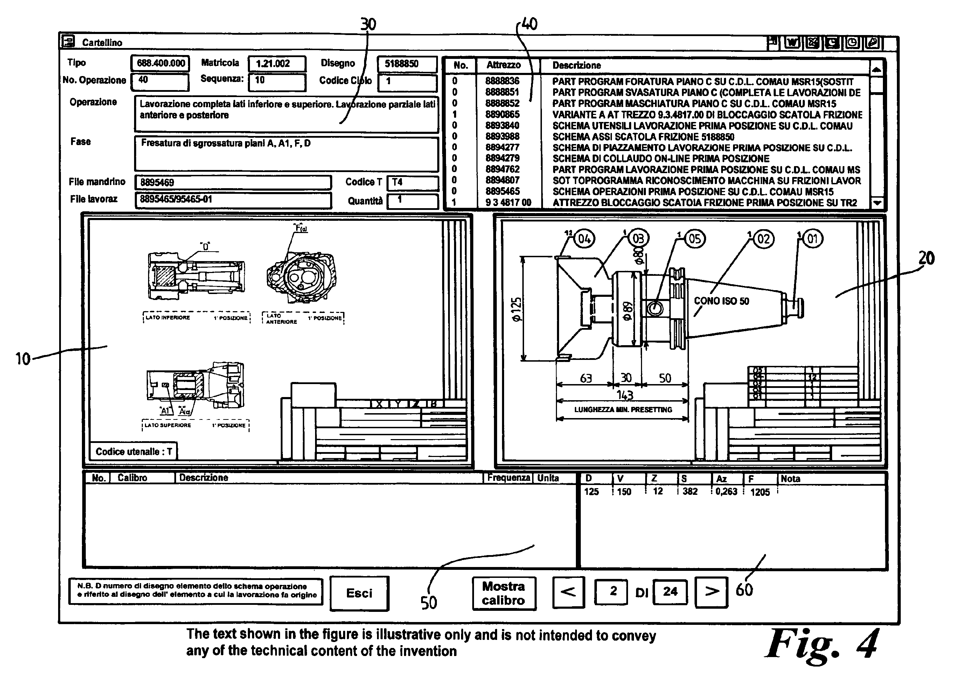

This principle is best exemplified, in a simple manner, by Figures 3 and 4 appended hereto.

Figure 3 shows a prior art CAD drawing used in one operation (comprising one or more phases) in the production of (in the example shown) a vehicle transmission housing.

Figure 3 shows three views of the part in question (ie. the transmission housing) together with (on the right hand side of the drawing) an elevational view of the tool needed for the operation in question.

The Figure 3 drawing contains *inter alia-information* identifying the operation in question together with tool feed, speed and diameter data.

In the case of the Figure 3 drawing however the various images plus the data tables shown may exist in other documents (for example if the tool in question has to complete a different operation on the same part, or even an operation on a different part). Thus any change to one part of the Figure 3 document may require the effecting of corresponding updates in numerous other documents in order to ensure consistency.

This is so even if the document of Figure 3 is stored electronically, and represents a very significant document updating burden.

Normally, in order to limit the documenting costs, the certified copies are distributed to the users as complete (comprehensive) documents. Not all the users need the same information. A worker who physically produces the parts needs this complete document; the worker who sets the tools needs only the tool drawing, and so on. In fact, the actual kind of document is redundant for the tool presetter (and not only for him).

In contrast the Figure 4 document is produced in accordance with the method of the invention.

In the Figure 4 document the various images (10,20) of the exemplary transmission housing and the tool, plus the data tables (30,40,50,60) shown, are produced as windows and contain data from the linked databases described above. Thus the Figure 4 document is created in real time by combining together the contents of various parts of the database. It follows that updating of one part of the document (say, altering the design of an aspect of the transmission housing) needs only to be effected in the relevant window shown (in this case window 10, although changes to the other windows are possible) for the update to take effect in all the documents employing the thus updated data set.

Data in Figure 3 are linked and updatable. For example data in the 40 window are not merely a list A double click on an item shows the document listed. If the document is not in a computerized format, the user is informed about where the document is filed.

The complete instrument is more powerful than the Figure 4 shows.

Data can be managed and viewed in a lot of other windows that each user can choose as he prefers.

With this kind of distribution the risks of finding out of date documents disappears; and archiving costs are dramatically reduced (because individual users do not need to make their own archive copies of documents).

Time management is part of the process of using the data but in the embodiment shown is not displayed in the documents. People that operate time management regimes could interface their data to the process data.

Documents are useful for the processes of each plant but, in a worldwide company, they represent the written format of the company experience. Under this aspect it could be useful share data with other plants.

Of course if such a change to the transmission housing necessitates changes to eg. the tabular data as well a simple update operation would cause the table update to take effect in all the documents requiring both the tabular data and the transmission housing images to be shown together.

Such updating, which derives from the use of linked databases as aforesaid, gives rise to an entirely new manner of relating document changes, across a number of documents in a production environment. Such an updating method could not be achieved through human effort alone. For this reason in practice the method is carried out using a suitably programmed computer.

In view of the foregoing the invention is considered also to reside in the production of documents according to the method defined and/or described herein.

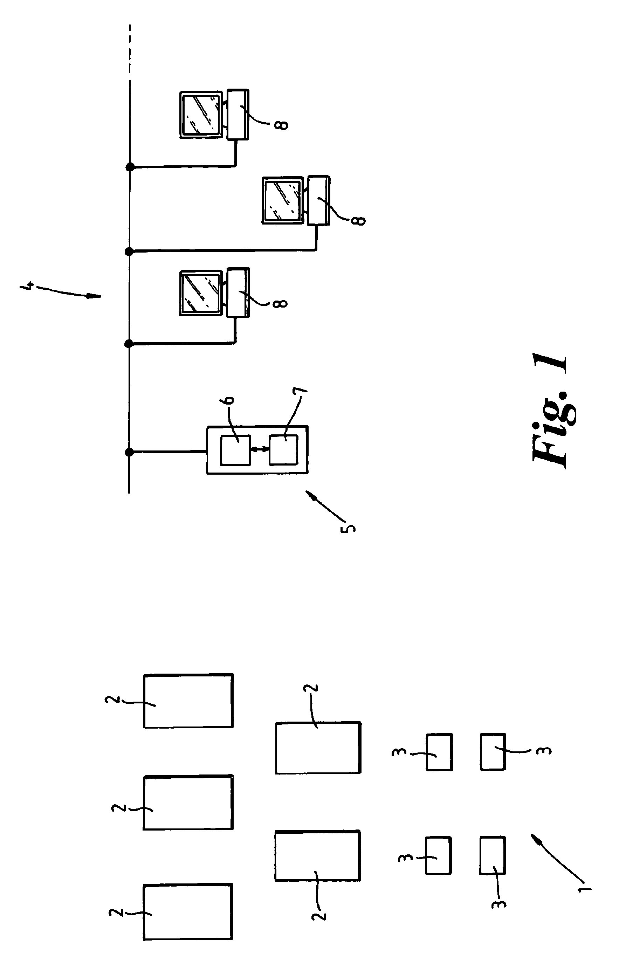

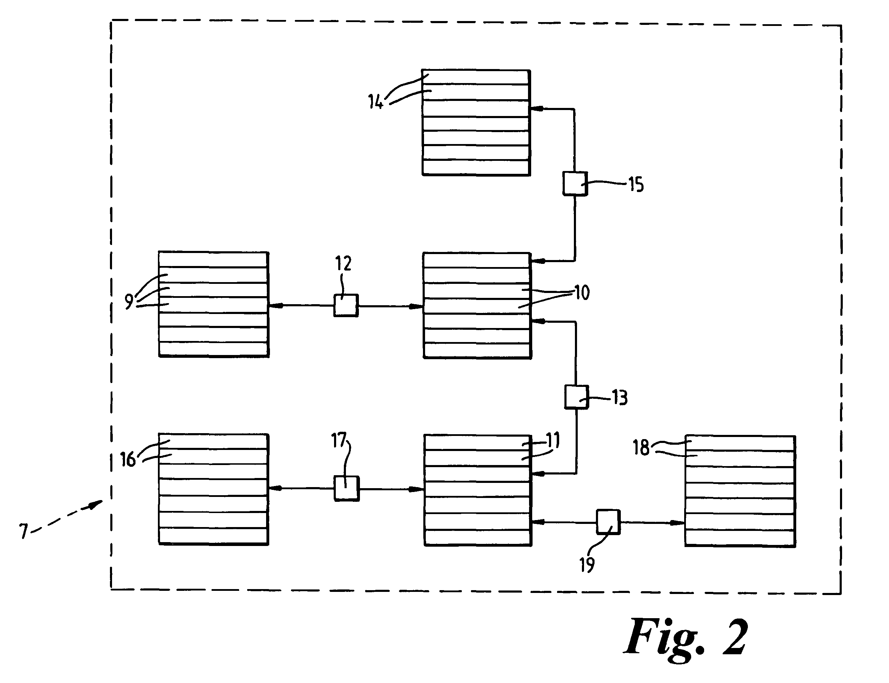

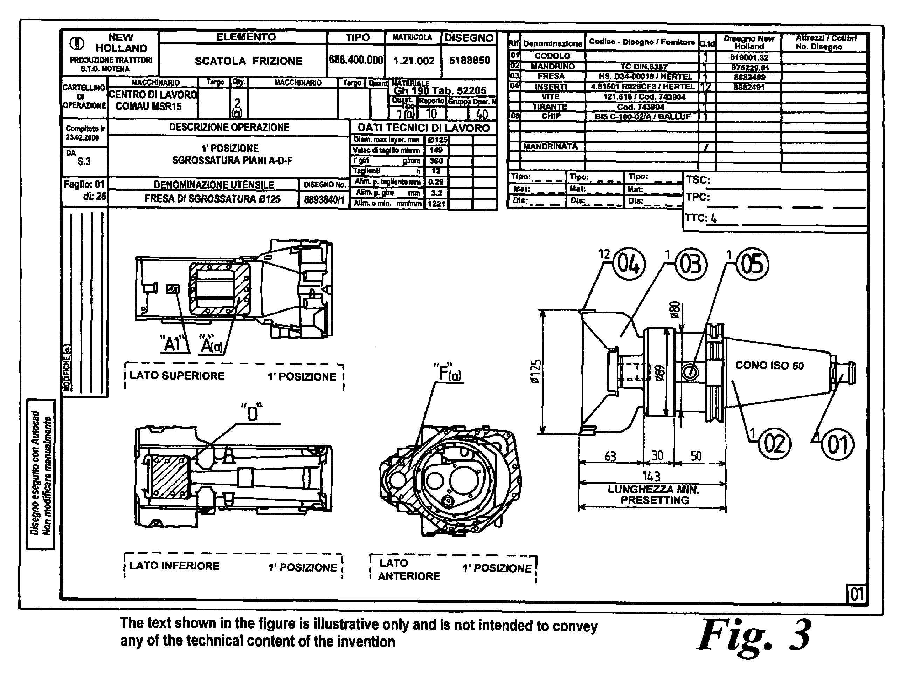

To this end in a practical factory arrangement, as shown in Figure 1 according to the invention, numeral 1 indicates a workshop comprising a number of machine tools 2, each for performing a given range of machining operations, and a number of tools/instruments 3.

To ensure all the machining processes are carried out properly (in terms of both the end result and operator safety), each machining process must be adequately documented. For which purpose, workshop 1 also comprises a computer system 4 for storing work cycle description documentation.

When producing a part using one or more machine tools 2, the first document to be drawn up is the work cycle, which lists all the operations by which a workpiece becomes a finished part; and each operation is defined by an orderly succession of elementary jobs/operations known as phases.

Computer system 4 comprises at least one server computer 5 having a processing unit 6 and a memory 7 (typically a hard disk); and a number of customer computers 8 network connected to server computer 5.

As shown in Figure 2, memory 7 of server computer 5 comprises a number of memory cells 9 organized into a work cycle table, and each containing a description of a given work cycle. To describe a work cycle, each memory cell 9 in the work cycle table comprises an identification code and a text description.

Memory 7 of server computer 5 also comprises a number of memory cells 10 organized into an operations table, and each containing a description of a given operation. To describe an operation, each memory cell 10 in the operations table comprises a progressive identification code number, a text description of the work to be carried out on the part, a description of the machine tool 2 to be used, and, if necessary, the location of machine tool 2 within workshop 1.

Memory 7 of server computer 5 also comprises a number of memory cells 11 organized into a phase table, and each containing a description of a given phase. To describe a phase, each memory cell 11 in the phase table comprises a progressive identification code number, a text description of the work to be carried out, and a text field for any comments.

Memory 7 of server computer 5 comprises a number of memory cells 12 containing ties, which associate a number of memory cells 10 in the operations table with each memory cell 9 in the work cycle table, so that each work cycle is assigned a list of operations by which a workpiece becomes a finished part.

Memory 7 of server computer 5 comprises a number of memory cells 13 containing ties, which associate a number of memory cells I1 in the phase table with each memory cell 10 in the operations table, so that each operation is assigned a list of phases to be performed to complete the operation.

In a preferred embodiment, memory 7 of server computer 5 comprises a number of memory cells 14 organized into a part table, and each containing a part identification number, a text description of the part, and a part drawing reference (typically the storage address). Memory 7 of server computer 5 also comprises a number of memory cells 15 containing ties, which associate a number of memory cells 14 in the part table with each memory cell 10 in the operations table, so that each operation is assigned a list of parts that can be machined using that particular operation. It should be stressed that memory cells 9 in the work cycle table and memory cells 10 in the operations table contain no information concerning the part for machining, the work cycle and the part for machining being related solely by the ties in memory cells 15. The reason for this is that the same work cycle may be used for machining different parts. For example, if the work cycle of a new part comprises the same operations as an existing work cycle, the new part need simply be assigned the existing work cycle to obtain complete documentation of the work carried out on the new part.

In a preferred embodiment, each memory cell 1 in the phase table is also assigned further phase-performance information. More specifically, each memory cell 11 in the phase table is assigned operating parameters of the tool/instrument 3 to be used (eg. test frequency, cutting speed, feed rate); reference to at least one drawing of a tool/instrument 3 to be used; and reference to at least one work drawing. Drawings are preferably stored in a drawing data bank, in which each drawing has its own address for easy display. Each memory cell 11 in the phase table is therefore also assigned a complete list of the tools/instruments 3 required to perform the phase.

For which purpose, memory 7 of server computer, 5, comprises a number of memory cells 16 organized into an operation parameter table, and each containing the operating parameters of the tool/instrument 3 to be used. Memory 7 of server computer 5 also comprises a number of memory cells 17 containing ties, which associate a number of memory cells 16 in the operating parameter table with each memory cell 11 in the phase table, so that each phase is assigned a series of operating parameters.

Memory 7 of server computer 5 comprises a number of memory cells 18 organized into a tool table, and each containing a progressive identification code number, a tool/instrument 3 drawing reference (typically the storage address), and a work drawing reference (typically the storage address). Memory 7 of server computer 5 also comprises a number of memory cells 19 containing ties, which associate a number of memory cells 18 in the tool table with each memory cell 11 in the phase table, so that each phase is assigned at least one tool.

It should be stressed that the tool/instrument 3 drawing and the work drawing are not combined into one drawing, but are obviously related by a respective phase, so that any alteration to a tool/instrument 3 drawing or to a work drawing is automatically reflected in all the phases in which the drawing is referenced. Moreover, if a tool/instrument 3 is used for different operations on a number of parts, one tool/instrument 3 drawing is sufficient and need simply be assigned to a number of phases.

In one possible embodiment, each memory cell 11 in the phase table and/or each memory cell 10 in the operations table also comprises an indication of estimated work time and/or estimated work cost.

Processing unit 6 of server computer 5 preferably provides for *"copy & paste"* operations to speed up creation of new documents from existing ones. That is, a memory cell 9, 10, 11 or 14 can be duplicated together with all the relative ties in memory cells 12,13 or 15 to subsequently modify the duplicate.

Memory cells 12, 13, 15, 17 and 18 containing the ties may be organized into one or more tie tables, or may be associated with the corresponding memory cells 9, 10,11,14,16 or 18.

Computer system 4 as described above has numerous advantages, by enabling documentation to be created and updated rapidly and efficiently, and to be distributed in real time.

Computer system 4 provides for extensive real-time information, such as which operations a given tool/instrument 3 is used for, or a complete list of the tools/instruments 3 required to work a given part. Knowing what is required to produce a given part, and what a given tool/instrument 3 is used to produce, any proposed alterations to tools/instruments 3 can be assessed beforehand in terms of involvement of other machining operations.

Finally, by means of connection to the drawing data bank, computer system 4 generates and distributes documentation within the plant with no risk of involuntary tampering, by distributing copies as opposed to original drawings.

## Claims

1. A method of relating changes, in a plurality of data records describing and/or defining a plurality of activities that are capable of being performed by a plurality of tools, to the operations of the tools themselves, the method comprising the steps of, in one or more memory devices,
a. providing a plurality of first memory locations each containing data defining a work cycle;
b. providing a plurality of second memory locations each containing data defining an operation that may form part of a said work cycle, each said operation comprising one or more phases;
c. providing a plurality of third memory locations each containing data defining a said phase;
d. providing a plurality of fourth memory locations each containing data relating to a part to be manufactured;
e. providing a plurality of fifth memory locations each containing data relating to an implement to be used in one or more of the phases; and
f. linking the data in the memory locations such that the data are combinable to create a plurality of data sets each including (i) the identification and/or characteristics of a part selected from the data in the fourth memory location, (ii) the identification and/or characteristics of one or more implements selected from the data in the fifth memory location and (iii) data defining a series of steps employing the or each implement and selected from the data in the first, second and third memory locations that amount to the manufacture of the part using the selected implement or implements, **characterised in that** the linking of the data is such as to cause automatic updating of linked data on the updating of any individual item of data.

2. A method according to Claim 1 wherein each data set is producible as a single document comprising a mix of graphical, numeric and textual data.

3. A method according to Claim 2 including the step of displaying the document via a display device.

4. A method according to any preceding claim including the step of creating and/or maintaining an address database containing data in one or more of the following classes:
a. configuration information including one or more paths by means of which a program may access data from the memory locations and activate one or more viewers permitting viewing of the data sets;
b. machine type information;
c. machine identification information;
d supplier irfiormation
e. machine and plant manufacturer information;
f. information identifying parts to be produced;
g. plant information
h. information on departments of a plant involved in the manufacture of parts; and
i. tool composition information,

5. A method according to any preceding claim including the step of creating and/or maintaining a document database containing data in one or more of the following classes:
a. document codes;
b. user identification data;
c. document format information;
d. document type information;
e. document location information;
f. engineer identification information;
g. costing information;
h. information on data creation dates; and
j. information on the booking of documents and the statuses booked to them.

6. A method according to any preceding claim including the step of creating and/or maintaining a part database containing data in one or more of the following classes:
a. information identifying a product in which a part is installable;
b. part type information;
c. part code information;
d. part description information;
e. database revision information; and
f part production status information.

7. A method according to any preceding claim including the step of creating a work cycle data set containing one or more of a cycle code, cycle type information and a description of a cycle.

8. A method according to Claim 7 including the step of creating an operation data set containing one or more of an operation identifier, a said cycle code, an operation number, an operation description, machine type information, individual machine identification, the "type position" in a said machine at which an operation takes place, machine position information, an operation description and a machine description.

9. A method according to Claim 8 including the step of creating a phase data set containing one or more of phase identification data, a phase description and information identifying one or more parts on which a phase may be carried out.

10. A method according to Claim 9 including the step of creating an implement data set containing one or more of a data element identifier, one or more said phase identification data, implement quantity information, implement type information, an implement code, one or more said operation identifiers, implement usage frequency data, implement usage unit of measure data, and date of creation and amendment data, the implement data set linking implement data, part programs and the phase data together.

11. A method according to Claim 10 including the step of creating a cutting information data set containing one or more of a data element identifier, phase identification information, tool diameter data, tool quantity data, tool cutting speed data, tool cutting edge number data and feed per edge data, the cutting information data set linking cutting information to the phase.

12. A method according to Claim 11 including the step of creating a cycle-operation-phase-part sequence data set, containing one or more of a data element identifier, a cycle identifier, an operation identifier, a phase number code, a phase identifier and a part identifier, the said data elements being linked in the data set.

13. A method according to any preceding claim including the step of performing a data entry operation in order to create or update one or more data sets.

14. A method according to any preceding claim including the step of activating a viewer to permit the display of documents generated in accordance with the method.

15. A production plant (1) comprising a number of machine tools (2), each for performing a given range of machining operations; a number of tools/instruments (3); and a computer system (4) for memorizing descriptive documentation of possible work cycles; the said production plant (1) being **characterized in that** the computer system (4) comprises:
a number of first memory cells (9) organized into a work cycle table, and each containing a description of a given work cycle;
a number of second member cells (10) organized into an operations table, and each containing a description of a given operation;
a number of third memory cells (11) organized into a phase table, and each containing a description of a given phase;
a number of fourth memory cells (12) containing first ties, which associate a number of second memory cells (10) in the operations table with each first memory cell (9) in the work cycle table, so that each work cycle is assigned a list of operations by which a workpiece becomes a finished part, and
a number of fifth memory cells (13) containing second ties, which associate a number of third memory cells (11) in the phase table with each second memory cell (10) in the operations table, so that each operation is assigned a list of phases by which to complete the operation.

16. A production plant (1) as claimed in Claim 15, wherein, to describe a work cycle, each first memory cell (9), in the work cycle table comprises an identification code and a text description.

17. A production plant (10) as claimed in Claim 15 or Claim 16, wherein, to describe an operation, each second memory cell (10) in the operations table comprises a progressive identification code number, a text description of the work to be carried out on the part, and a description of the machine tool (2) to be used to perform the work.

18. A production plant (10) as claimed in Claim 17, wherein, to describe an operation, each second memory cell (10) in the operations table comprises the location, within the production plant (10), of the machine tool (2) to be used.

19. A production plant (1) as claimed in Claim 17 or Claim 18, wherein each second memory cell (10) in the operations table comprises an indication of estimated work time and/or estimated work cost

20. A production plant (1) as claimed in any of Claims 15 to 19, wherein, to describe a phase, each third memory cell (11) in the phase table comprises a progressive identification code number, and a text description of the work to be carried out.

21. A production plant (1) as claimed in Claim 20 wherein, to describe a phase, each third memory cell (11) in the phase table is associated with operating parameters of the tool/instrument (3) to be used.

22. A production plant (1) as claimed in Claim 21, and comprising:
a number of sixth memory cells (16) organized into an operating parameter table, and each containing operating parameters of the tool/instrument (3) to be used; and
a number of seventh memory cells.(17) containing ties, which associate a number of sixth memory cells (16) in the operating parameter table with each third memory cell (11) in the phase table, so that each phase is assigned a series of operating parameters.

23. A production plant (1) as claimed in any of Claims 20, 21 or 22, wherein, to describe a phase, each third memory cell (11) is associated with at least one drawing of a tool to use, and at least one work drawing.

24. A production plant (1) as claimed in Claim 23 and comprising:
a number of eighth memory cells (18) organized into a tool table, and each containing a progressive identification code number, a reference to a drawing of a tool/instrument (3), and a reference to a work drawing; and
a number of ninth memory cells (19) containing ties, which associate a number of eighth memory cells (18) in the tool table with each third memory cell (11) in the phase table, so that each phase is assigned at least one tool.

25. A production plant (1) as claimed in one of Claims 20 to 24, wherein each third memory cell (11) in the phase table comprises an indication of estimated work time and/or estimated work cost

26. A production plant (1) as claimed in one of Claims 15 to 25, and comprising:
a number of tenth memory cells (14) organized into a part table, and each containing a description of a part; and
a number of eleventh memory cells (15) containing third ties, which associate a number of tenth memory cells (14) in the part table with each second memory cell (10) in the operations table, so that each operation is assigned a list of parts that can be worked by the operation.

27. A production plant (1) as claimed in one of Claims 15 to 26, and comprising a processing unit (6) for duplicating a memory cell (9; 10; 11; 14) together with all the relative ties.
